# EUROPEAN PATENT SPECIFICATION

(11) **EP 1 053 672 B1**
(45) Date of publication and mention of the grant of the patent: **03.09.2003**
(21) Application number: 00110170.8
(22) Date of filing: 15.05.2000
(51) Int. Cl.: A01D 46/24, B25G 1/04

(54) **Telescopic handling pole for agricultural tools**
Teleskopische Handlungsstange für landwirtschaftliche Geräte
Bâton télescopique de manipulation pour outils agricoles

(30) Priority: 20.05.1999 IT PD990109
(43) Date of publication of application: 22.11.2000
(73) Proprietor: ZANON S.R.L., 35011 Campodarsego (Padova) (IT)
(72) Inventor: Fabris, Renato, 35010 Limena (Padova) (IT)
(74) Representative: Modiano, Guido, Dr.-Ing.

(56) References cited:
- EP-A- 0 666 019
- GB-A- 2 121 903
- US-A- 4 922 577

## Description

The present invention relates to a telescopic handling pole for agricultural tools.

The pole is particularly but not exclusively adapted for handling tools for knocking down or gathering olives or similar agricultural products.

It is known that for the gathering of many agricultural products, and typically for knocking down or gathering olives, tools are used which substantially comprise two opposite oscillating sectors connected to actuation means and to each of which a corresponding rake-like plurality of rods is fixed.

The tool is usually fitted onto a telescopic pole inside which there is the hydraulic or pneumatic connection to the supply.

The pole is of course provided, in a downward region, with a coupling to a duct for connection to the pneumatic source.

A handling pole of this type is disclosed in utility model application no. BO94U16 dated February 8, 1994.

The pole is composed of a first tubular element inside which a second tubular element slides coaxially; a connector is arranged between them and rigidly locks them in their mutual sliding.

A third tubular element is arranged coaxially in the pole, and a fourth tubular element slides thereon; said tubular elements form, as a whole, the hydraulic or pneumatic connection.

A sealing sleeve is arranged between the third and fourth tubular elements.

Although the above described pole is particularly commercially appreciated because of the fact that it associates the telescopic feature with the hydraulic or pneumatic connection and that said connection is provided internally, it has drawbacks, including a certain constructive complexity in addition to the large number of elements composing it, which make it heavy and tiring for the user.

The aim of the present invention is therefore to provide a telescopic pole which is constructively simpler than current ones, although it maintains for the operator the same easy handling with equal functionality.

Within this aim an object of the invention is to provide a telescopic pole which is strong and lighter than current ones.

Another object is to provide a telescopic pole which can be installed easily and is extremely reliable.

These and other objects which will become better apparent hereinafter are achieved by a telescopic handling pole for agricultural tools with an end which can be associated with a pneumatic supply comprising a combined handle-valve and an end which can be associated with a tool or with the corresponding movement actuator, characterized in that it comprises:
-- a first tubular element, inside which a second internal tubular element is slidingly coupled and can be connected to said actuator;
-- connecting means for associating the first tubular element with the second tubular element, locking them in any mutual sliding position;
-- a third tubular element, which can be connected to said supply and is coaxially rigidly coupled inside the first tubular element; and
-- sealing means, which are rigidly coupled to the second element and act between its internal surface and the external surface of the third tubular element.

Further characteristics and advantages of the invention will become better apparent from the detailed description of an embodiment thereof, illustrated only by way of non-limitative example in the accompanying drawings, wherein:
Figure 1 is a view of the pole according to the invention;
Figure 2 is an enlarged-scale sectional view, taken along a diametrical plane of the pole of Figure 1;

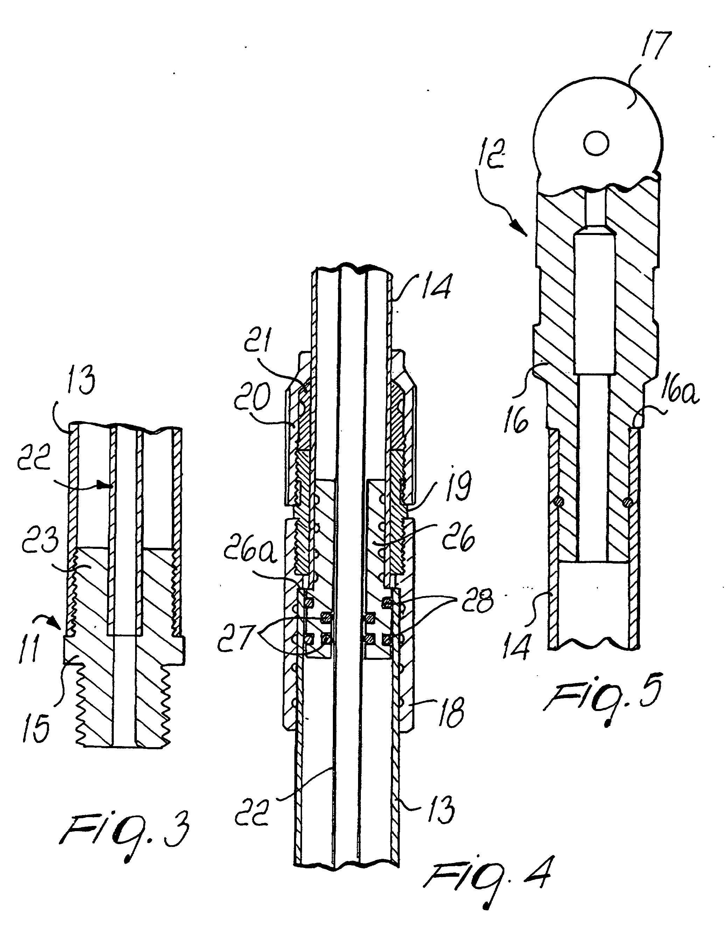

Figure 3 is an enlarged-scale sectional view of a detail of the end of the pole that connects to the pneumatic supply;
Figure 4 is an enlarged-scale sectional view of a detail of the region where the various elements that compose the pole mutually connect;
Figure 5 is an enlarged-scale sectional view of a detail of the end of the pole that is designed to be associated with the agricultural tool.

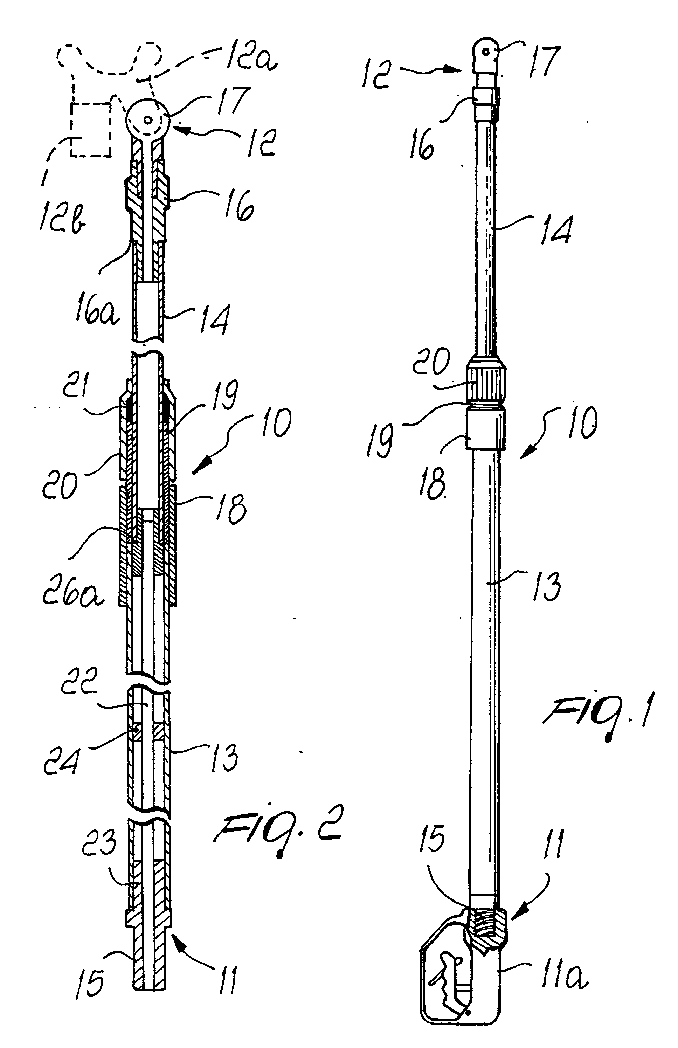

With reference to the above figures, a telescopic handling pole for agricultural tools is generally designated by the reference numeral 10 and has an end 11 (the lower one) which is associable with a pneumatic supply (combined handle-valve 11a) and is shown in Figure 1, and an end 12 (the upper one) which is associable with a tool 12a and with a corresponding movement actuator 12b, which are shown in dashed lines in Figure 2.

According to the invention, the pole 10 comprises a first tubular element 13, which constitutes the second grip point for the user and in which a second tubular element 14 is slidingly coupled.

Therefore, with respect to the user the first element 13 is static, while the second element 14 is slideable in order to place its upper end at an adapted height.

The first tubular element 13 supports, in a downward region and at the end 11, a connector 15 for connection to the combined handle-valve 11a for pneumatic supply, and the second tubular element 14 supports, at the upper end 12, a connector 16 for connecting the actuator 12a which also acts as a support for an articulation element 17 supporting the tool.

The pole 10 also comprises connecting means for associating the first tubular element 13 with the second tubular element 14; said means comprise three annular elements, associated one another and designated by the reference numerals 18, 19 and 20 respectively: the first one 18 is rigidly coupled to the first tubular element 13 and the second one 19 acts as a threaded coupling between the element 18 and the element 20.

The annular element 18 is internally threaded in order to couple to the connecting annular element 19, which in turn engages, by means of a thread, the third element 20 and surrounds part of the second tubular element 14.

A frustum-shaped elastomer ring 21 is arranged internally between the two annular elements 19 and 20 and the screwing and unscrewing of one element with respect to the other compresses it more or less intensely against the outer surface of the second tubular element in order to block its sliding.

Moreover, the pole 10 comprises a third tubular element 22, which is rigidly coupled, by means of its lower end 23, to the connector 15, in which it is inserted, and is thus arranged coaxially inside the first tubular element 13.

One or more annular spacers 24 can be provided between the first tubular element 13 and the third tubular element 22 in order to maintain the coaxial arrangement.

Since the third tubular element 22 is rigidly coupled to the first tubular element 13, it can enter the second tubular element 14 according to the degree of extension of the pole 10.

The extension stroke of the pole is determined by the shoulders 16a and 26a that set the limit of the penetration of the second tubular element 14 in the first tubular element 13 and its extraction during extension.

Accordingly, the lower end 25 of the second tubular element 14 (arranged inside the first element 13) is rigidly coupled to a sleeve 26 which is slidingly interposed between the first tubular element 13 and the third tubular element 22 and supports, in corresponding seats, sealing rings 27, for example of the O-ring type, which act on the outer surface of the third element 22.

Other rings 28 arranged between the sleeve 26 and the first tubular element 13 act as guides and shock absorbers.

Accordingly, an hydraulic or pneumatic passage is provided between the third element 22 and the second element 14.

The inside diameter of the second tubular element 14 must of course be adapted first of all to allow the free translatory motion, inside it, of the third tubular element 22 and moreover to contain the chamber, preventing the formation of a duct having a larger cross-section for the pressurized fluid.

In practice it has been observed that the intended aim and objects of the present invention have been achieved.

The telescopic pole is in fact composed of only three main elements, one of which (the second tubular element 14) has the dual function of tool support and hydraulic or pneumatic connection.

The pole furthermore has, like other poles, connectors and seals, but in this case the hydraulic or pneumatic seal is provided between the second element 14 and the third element 22.

As regards maneuverability, it is substantially the same as in conventional poles, although the reduction in the number of elements leads to a reduction in overall weight, to the full advantage of user comfort.

The invention thus conceived is susceptible of numerous modifications and variations, all of which are within the scope of the claims.

All the details may furthermore be replaced with other technically equivalent elements.

In practice, the materials used, so long as they are compatible with the contingent use, as well as the dimensions, may be any according to requirements.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A telescopic handling pole for agricultural tools with an end which can be associated with a pneumatic supply and an end which can be associated with a tool and with a corresponding movement actuator, **characterized in that** it comprises:
a first tubular element, inside which a second tubular element is slidingly coupled and can be connected to said actuator;
connecting means for associating the first tubular element with the second tubular element, locking them in any mutual sliding position;
a third tubular element, which can be connected to said supply and is coaxially rigidly coupled inside the first tubular element; and
sealing means, which are rigidly coupled to the second tubular element and act between the internal surface of the first element and the external surface of the third tubular element.

2. The pole according to claim 1, **characterized in that** said first tubular element supports, in a downward region, a connector for connection to said pneumatic supply and said second tubular element supports, at the upper end, a connector for the connection of said actuator which also acts as support for an articulation element for said tool.

3. The pole according to claim 1, **characterized in that** said connecting means for associating the first tubular element with the second tubular element comprise three annular elements associated one another, a first one of which is rigidly coupled to said first tubular element and has an internal thread for coupling to a second externally threaded annular element which acts as a connector for coupling with a third internally threaded annular element which is designed to mutually lock said first and second tubular elements, a frustum-shaped elastomer ring being arranged internally between said first two annular elements, the screwing and unscrewing of one element with respect to the other compressing said ring more or less intensely against the outer surface of the second tubular element in order to lock its sliding.

4. The pole according to claim 1, **characterized in that** said third tubular element is rigidly coupled, by means of its lower end, to said pneumatic supply connector, in which it is engaged, and is thus arranged coaxially inside said first tubular element.

5. The pole according to claim 1, **characterized in that** one or more annular spacers are provided between said first tubular element and said third tubular element in order to maintain a coaxial arrangement.

6. The pole according to claim 1, **characterized in that** the end of said second tubular element that is internal to the first tubular element is rigidly coupled to a sleeve which is slidingly interposed between said first tubular element and said third tubular element and supports sealing rings in corresponding seats.

7. The pole according to claim 1, **characterized in that** a hydraulic or pneumatic passage is provided between said third tubular element and said second tubular element.

## Patentansprüche

1. Teleskopstange zum Handhaben von landwirtschaftlichen Geräten, mit einem Ende, das mit einer Druckluftversorgung verbunden werden kann, und einem Ende, das mit einem Gerät und mit einem entsprechenden Betätigungselement zur Bewegung verbunden werden kann, **dadurch gekennzeichnet, dass** sie umfasst:
ein erstes röhrenförmiges Element, innerhalb dessen ein zweites röhrenförmiges Element verschiebbar eingebracht ist und mit dem Betätigungselement verbunden werden kann,
Verbindungsmittel zur Verbindung des ersten röhrenförmigen Elementes mit dem zweiten röhrenförmigen Element, welche die beiden in einer beliebigen gegenseitigen Verschiebe-Position festlegen,
ein drittes röhrenförmiges Element, das mit der Versorgung verbunden werden kann und koaxial innerhalb des ersten röhrenförmigen Elementes starr befestigt ist und
Dichtungsmittel, die starr mit dem zweiten röhrenförmigen Element verbunden sind und zwischen der Innenfläche des ersten Elements und der Außenfläche des dritten röhrenförmigen Elementes wirken.

2. Stange gemäß Anspruch 1, **dadurch gekennzeichnet, dass** das erste röhrenförmige Element in einem abwärts gerichteten Bereich ein Verbindungsstück zur Verbindung mit der Druckluftversorgung trägt und dass das zweite röhrenförmige Element an dem oberen Ende ein Verbindungsstück zu der Verbindung des Betätigungselementes trägt, das auch als Halter für ein Gelenkelement des Gerätes fungiert.

3. Stange gemäß Anspruch 1, **dadurch gekennzeichnet, dass** die Verbindungsmittel zur Verbindung des ersten röhrenförmigen Elementes mit dem zweiten röhrenförmigen Element drei ringförmige Elemente umfassen, die miteinander verbunden sind, wobei ein erstes davon starr an dem ersten röhrenförmigen Element befestigt ist und ein Innengewinde zur Verbindung mit einem zweiten ringförmigen Element mit einem Außengewinde aufweist, das als ein Verbindungselement zur Verbindung mit einem dritten ringförmigen Element mit einem Innengewinde fungiert, wobei das dritte ringförmige Element dazu gestaltet ist, das erste und das zweite ringförmige Element gegenseitig festzulegen, wobei ein kegelstumpfartiger Elastomerring zwischen den ersten beiden ringförmigen Elementen angeordnet ist, und wobei das Verschrauben und Losschrauben eines Elements bezüglich des anderen den Ring mehr oder weniger stark gegen die äußere Fläche des zweiten röhrenförmigen Elementes drückt, um seine Verschiebung zu hemmen.

4. Stange gemäß Anspruch 1, **dadurch gekennzeichnet, dass** das dritte röhrenförmige Element mittels seines unteren Endes starr an dem Verbindungsglied für die Druckluftversorgung befestigt ist, in welches es eingreift und somit koaxial innerhalb des ersten röhrenförmigen Elements angeordnet ist.

5. Stange gemäß Anspruch 1, **dadurch gekennzeichnet, dass** ein oder mehrere ringförmige Abstandshalter zwischen dem ersten röhrenförmigen Element und dem dritten röhrenförmigen Element vorgesehen sind, um eine koaxiale Anordnung beizubehalten.

6. Stange gemäß Anspruch 1, **dadurch gekennzeichnet, dass** das Ende des zweiten röhrenförmigen Elementes, das sich innerhalb des ersten röhrenförmigen Elementes befindet, starr mit einer Muffe verbunden ist, die zwischen dem ersten röhrenförmigen Element und dem dritten röhrenförmigen Element verschiebbar eingebracht ist und Dichtringe in entsprechenden Aufnahmen hält.

7. Stange gemäß Anspruch 1, **dadurch gekennzeichnet, dass** ein Hydraulikoder Druckluft-Durchgang zwischen dem dritten röhrenförmigen Element und dem zweiten röhrenförmigen Element vorgesehen ist.

## Revendications

1. Perche télescopique de travail destinée à des outils de culture, pourvue d'une extrémité que l'on peut associer à une alimentation en air comprimé et d'une extrémité que l'on peut associer à un outil et d'un actionneur de mouvement correspondant, **caractérisée en ce qu'**elle comprend :
un premier élément tubulaire, à l'intérieur duquel un deuxième élément tubulaire est couplé coulissant, et peut être relié audit actionneur ;
des moyens de raccordement servant à associer le premier élément tubulaire et le deuxième élément tubulaire, en les verrouillant dans une position de coulissement mutuel quelconque ;
un troisième élément tubulaire que l'on peut raccorder à ladite alimentation et qui est couplé rigidement, de manière coaxiale, à l'intérieur du premier élément tubulaire ; et
des moyens d'étanchéité qui sont couplés rigidement au deuxième élément tubulaire et qui agissent entre la surface intérieure du premier élément et la surface extérieure du troisième élément tubulaire.

2. Perche selon la revendication 1, **caractérisée en ce que** ledit premier élément tubulaire supporte, dans une région vers le bas, un raccord de raccordement à ladite alimentation en air comprimé, et **en ce que** ledit deuxième élément tubulaire supporte, au niveau de l'extrémité supérieure, un raccord servant au raccordement dudit actionneur, lequel sert également de support pour un élément d'articulation dudit outil.

3. Perche selon la revendication 1, **caractérisée en ce que** lesdits moyens de raccordement destinés à associer ledit premier élément tubulaire et le deuxième élément tubulaire comprennent trois éléments annulaires associés les uns aux autres, dont un premier est couplé rigidement audit premier élément tubulaire et comporte un filetage intérieur pour couplage avec un deuxième élément annulaire fileté extérieurement qui sert de raccord de couplage avec un troisième élément annulaire fileté intérieurement qui est conçu pour bloquer mutuellement lesdits premier et deuxième éléments tubulaires, une bague en élastomère en forme de tronc étant agencée de manière interne entre lesdits deux premiers éléments annulaires, le vissage et le dévissage d'un élément par rapport à l'autre comprimant plus ou moins fortement ladite bague contre la surface extérieure du deuxième élément tubulaire pour en bloquer le coulissement.

4. Perche selon la revendication 1, **caractérisée en ce que** ledit troisième élément tubulaire est couplé rigidement, au moyen de son extrémité inférieure, audit raccord d'alimentation en air comprimé, dans lequel il est engagé, et est donc agencé coaxialement à l'intérieur dudit premier élément tubulaire.

5. Perche selon la revendication 1, **caractérisée en ce qu'**un ou plusieurs écarteurs annulaires sont prévus entre ledit premier élément tubulaire et ledit troisième élément tubulaire, dans le but de maintenir un agencement coaxial.

6. Perche selon la revendication 1, **caractérisée en ce que** l'extrémité dudit deuxième élément tubulaire qui se trouve à l'intérieur dudit premier élément tubulaire est couplée rigidement à un manchon qui est interposé coulissant entre ledit premier élément tubulaire et ledit troisième élément tubulaire, et supporte des bagues d'étanchéité logées dans des sièges correspondants.

7. Perche selon la revendication 1, **caractérisée en ce qu'**un conduit hydraulique ou pneumatique est prévu entre ledit troisième élément tubulaire et ledit deuxième élément tubulaire.
